# EUROPÄISCHE PATENTSCHRIFT

(11) **EP 1 540 904 B1**
(45) Veröffentlichungstag und Bekanntmachung des Hinweises auf die Patenterteilung: **16.08.2006**
(21) Anmeldenummer: 03757671.7
(22) Anmeldetag: 17.09.2003
(51) Int. Cl.: H04L 12/58

(54) **VERFAHREN ZUR EMPFÄNGERSEITIGEN AUTOMATISCHEN BEHANDLUNG VON UNERWÜNSCHTER ELEKTRONISCHER POST IN KOMMUNIKATIONSNETZEN**
METHOD FOR AUTOMATICALLY HANDLING UNDESIRED ELECTRONIC MAIL IN COMMUNICATION NETWORKS AT THE RECIPIENT END
PROCEDE POUR TRAITER AUTOMATIQUEMENT COTE DESTINATAIRE UN COURRIER ELECTRONIQUE NON SOUHAITE DANS DES RESEAUX DE COMMUNICATION

(30) Priorität: 17.09.2002 DE 10243243
(43) Veröffentlichungstag der Anmeldung: 15.06.2005
(73) Patentinhaber: T-Mobile Deutschland GmbH, 53227 Bonn (DE)
(72) Erfinder: KELLER, Walter, 40880 Ratingen (DE)
(74) Vertreter: Riebling, Peter
(86) Internationale Anmeldenummer: PCT/DE2003/003094
(87) Internationale Veröffentlichungsnummer: WO 2004/028103

(56) Entgegenhaltungen:
- US-B1- 6 249 805

## Beschreibung

Die Erfindung betrifft ein Verfahren zur empfängerseitigen automatischen Behandlung von unerwünschter elektronischer Post in Kommunikationsnetzen nach dem Oberbegriff des Patentanspruchs 1.

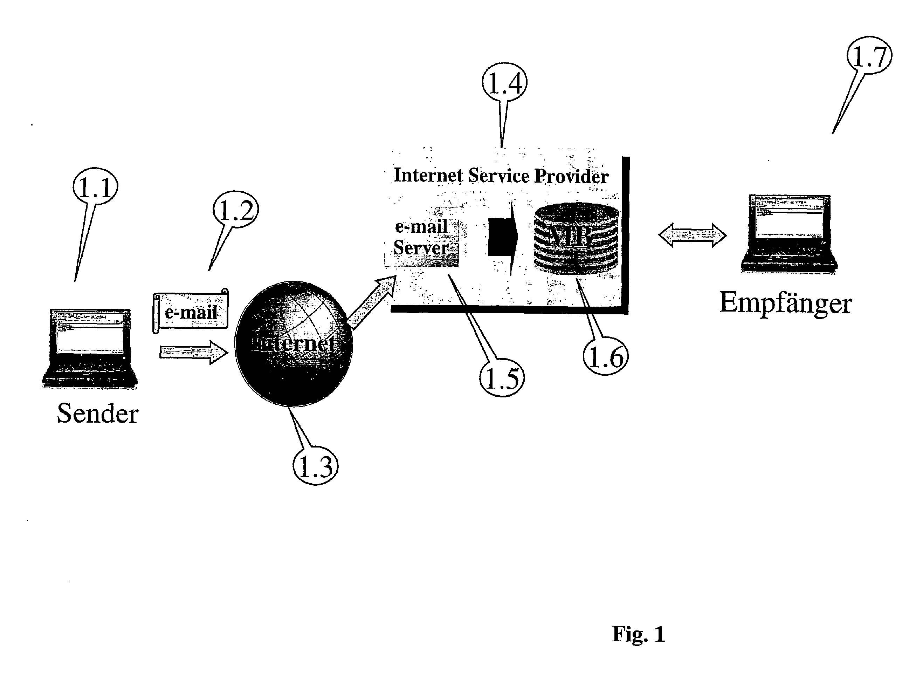

Große Teile der Bevölkerung nutzen heute elektronische Post im gewerblichen und/oder privaten Bereich. Dabei findet das sogenannte e-mail-Verfahren, welches die standardisierten Internetprotokoll auf TCP/IP-Basls (IETF RFC 791) nutzt, die größte Verbreitung.
Die prinzipielle Verfahrensweise ist in Figur 1 dargestellt. Ein Sender, z,B. ein Personal Computer (PC) 1.1, verschickt eine e-mail 1.2 über das öffentliche Internet 1.3 mit der Zieladresse eines Empfängers 1.7. Das Internet stellt die e-mail auf der Basis vereinbarter Protokolle und Namens-Konventionen einem e-mail-Server 1.5 des Internet Service Provider (ISP) 1.4 zu, der die Empfängeradresse verwaltet. Der e-mail-Server 1,5 stellt die Nachricht in die Mailbox 1.6 des Empfängers ein, aus der sie der Empfänger 1.7 abholen kann.

Die Empfängeradresse kann eine sogenannte Aliasadresse sein, die eine Klartext-Kennzeichnung enthält, gefolgt von der intemet Service Provider-Adresse (ISP-Adresse) sowie der Länderkennung, z.B.:

Heinz.Mustermann@Empfaenger-ISP.de

Das mail-Protokoll beinhaltet ebenfalls eine Absenderadresse, die sinngemäß aufgebaut ist, z.B.:

Schrolt-Versandt@Absender-)SP.de

Leider ist die Missbrauchrate bei elektronischer Post sehr hoch. Dubiose Absender belästigen weite Bevölkerungsschichfien mit ungewünschten e-mails, die in der Praxis oft pornografischen, radikalen und/oder werbemäßigen Charakter haben.

Hier wird versucht, durch die Hintertür Geld mit ahnungslosen Kunden zu verdienen. oft gelangen auf diesem Wege auch Viren in die PCs. Diese Art unerwünschte Postzusteliung wird in Internetkreisen oft mit der Kennzeichnung "Junkmail" bezeichnet.

Die US 6 249 805 B1 offenbart, entsprechend den Merkmalen des Oberbegriffs des Patentanspruchs 1, ein Verfahren zur empfängerseltigen automatischen Behandlung von unerwünschter elektronischer Post in Kommunikationsnetzen, bei dem eintreffende e-mails vor der Abspeicherung in einer Mailbox des Empfängers automatisch einem Vergleich der mitgeführten Absenderadresse mit einer dem Empfänger zugeordneten elektronisch zugänglichen Liste autorisierter Absenderadressen unterzogen werden, wobei nur diejenigen e-mails in die Mailbox des Empfängers übertragen werden, die eindeutig von autorisierten Absendern versendet wurden.

Die Aufgabe der Erfindung besteht darin, ein Verfahren zur empfängerseitigen automatischen Behandlung von unerwünschter elektronischer Post in Kommunikationsnetzen vorzuschlagen, um eine ungewünschte Belästigung des Empfängers mit Junkmail zu unterbinden.

Diese Aufgabe wird erfirtdungsgemäß durch die Merkmale des Patentanspruchs 1 gelöst.
Erfindungsgemäß wird eine Analyse auf serienweise vorhandene inkrementierte Benutzerkennungen durchgeführt, um so auf automatische Einbruchversuche in das e-mall-System zu schließen. Somit können Übeltäter, die alle möglichen Codes automatisch durchtesten, recht einfach durch diese zusätzliche Analyse identifiziert werden.

In einer bevorzugten Ausgestaltung der Erfindung sind empfängerseitig zwei logisch und/oder physikalisch getrennte Mailboxen angeordnet, wobei der e-mail Server alle eintreffenden e-mails, die zwar die korrekte Empfängeradresse des Teilnehmers besitzen aber nicht In der empfängerseitigen Absenderliste enthalten sind, in die zweite Mailbox JMB ablegt, und diese somit für weitergehende Bearbeitung seitens Internet Service Provider, Behörden und/oder den Empfänger zur Verfügung stehen.

Vorzugsweise können die e-mails im e-mail-Server, einer Vergfeichseinrichtung und / oder zumindest einer der Briefkästen durch den Empfänger und / oder den ISP konfigurierbar einem automatischen Bearbeitungs- und / oder Analyseprozess unterzogen werden, der fallspezifisch einzeln oder auf Dauer initiiert bzw. konfigurierbar ist. Irisbesondere können in der JMB automatisch alle ausführbaren Programme, die als Anhang zu e-mails versandt werden, abgetrennt werden.

Gemäß einer Weiterbildung der Erfindung können automatisch Untertassungsgesuche oder Abmahnungen generiert und an Absender unerwünschter e-mails zugestellt werden,

Ferner können Virenuntersuchungen, beispielsweise zu einer festen Uhrzeit, oder alternativ bei jeder eintreffenden Nachricht, durchführt werden, und der Inhalt der JMB zyklisch in bestimmten Zeitabständen gelöscht werden.

Die Erfindung wird unter Verwendung von Zeichnungsfiguren, die hier lediglich eine mögliche Ausführungsart in schematischer Darstellung beschreiben, erläutert, wobei sich anhand der Zeichnungsfiguren weitere Anwendungsgebiete und Vorteile der Erfindung ergeben.

Es zeigen:
Figur 1: eine schematische Darstellung einer e-mail Zustellung über das Internet;
Figur 2: eine Darstellung einer e-mail Zustellung in der erfindungsgemäß modifizierten Verfahrensweise.

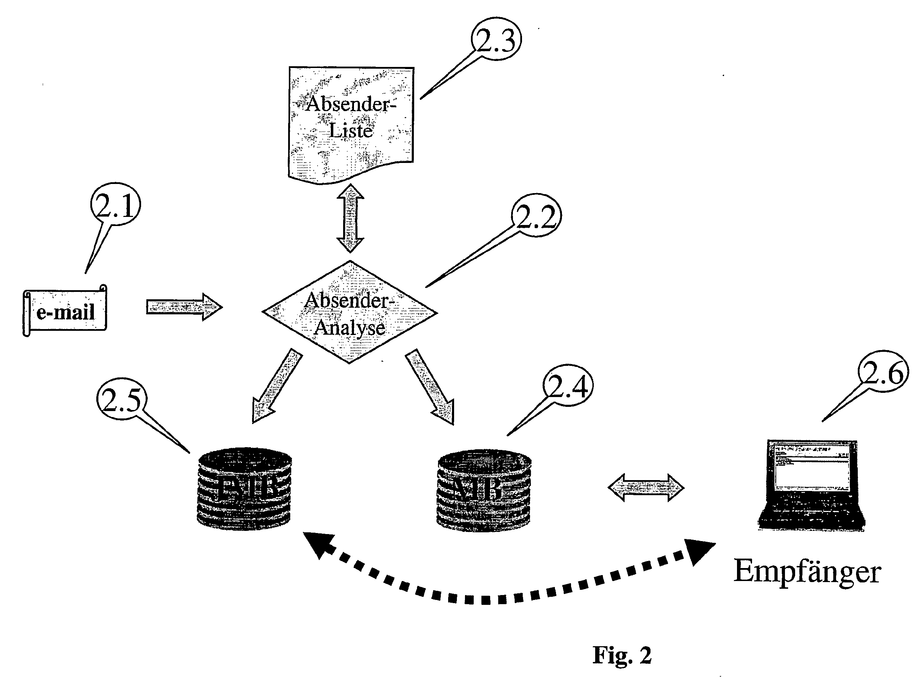

Ausgehend von der allgemeinen Verfahrensweise bei der e-mail Zustellung gemäß Figur 1 ist in Figur 2 die erfindungsgemäße Verfahrensweise dargestellt. Die beim ISP 1.4 eintreffende e-mail 2.1 wird in einer Analyseeinrichtung 2.2 des e-mail-Servers 1.5 automatisch bezüglich ihrer Absenderadresse verifiziert. Die empfängerindividuell zugelassenen Absenderadressen sind in einer Datenbank 2.3 in Form einer Absenderliste gespeichert. E-mails mit Absenderadressen, die in der Liste 2.3 enthalten sind, gelten als legitim und werden der Mailbox MB 2.4 des Empfängers 2.6 zugestellt.

Alle übrigen e-mails mit korrekter Empfängeradresse, aber nicht authorisierter Absenderadresse werden verworfen oder optional einer zweiten Mailbox (Junkmail Box JMB) 2.5 zugestellt. Der Empfänger kann den Inhalt der JMB 2.5 nach Bedarf einsehen.

Auf diese Weise wird der Empfänger 2.6 nicht durch unerwünschte Absender belästigt, die seine korrekte e-mail-Adresse zwar kennen, jedoch keine Empfänger-Authorisierung besitzen. Durch die Einführung der optionalen JMB 2.5 kann der Teilnehmer dennoch alle Mails auf Wunsch einsehen, sofern er möchte.

Weiterhin sind automatische Konfigurationsmöglichkeiten bei der Absenderanalyse und/oder zumindest einer der Mailboxen 2.4, 2.5 teilnehmerseitig und/oder ISP-seitig realisierbar. Die Erstellung und Pflege der Absenderliste obliegt dem jeweiligen Teilnehmer, d.h. Eigentümer der MB. Optional kann er die automatische Übertragung von Mail-Absendem der Nachrichten in MB2 durch entsprechende Selektion der betreffenden Mails und "Anklicken" einer diesbezüglichen Funktion/Kommando veranlassen. Dies spart die manuelle Eingabe der Absender.

Es kann vorgesehen sein, dass in der JMB 2.5 eintreffende Mails auf Viren untersucht werden oder auf gesetzeswidrige oder unmoralische Inhalte. Sogenannte Anlagen, z.B. ausführbare Programme, die Viren enthalten können, können gelöscht werden und/oder an Hand der Empfängeradressfelder können Rückschlüsse auf die Absender gezogen werden und beispielsweise automatisch Unterlassungsgesuche oder Abmahnungen zugestellt werden.

## Patentansprüche

1. Verfahren zur empfängerseitigen automatischen Behandlung von unerwünschter elektronischer Post in Kommunikationsnetzen, bei dem eintreffende e-mails (2.1) vor der Abspeicherung in einer Mailbox (2.4) des Empfängers (2.6) automatisch einem Vergleich der mitgeführten Absenderadresse mit einer dem Empfänger zugeordneten elektronisch zugänglichen Liste (2.3) autorisierter Absenderadressen unterzogen werden, wobei nur diejenigen e-mails in die Mailbox (2.4) des Empfängers übertragen werden, die eindeutig von autorisierten Absendern versendet wurden,
**dadurch gekennzeichnet,**
**dass** eine Analyse auf serienweise vorhandene inkrementierte Benutzerkennungen durchgeführt wird, um so auf automatische Einbruchversuche in das e-mail-System zu schließen.

2. Verfahren gemäß Anspruch 1, **dadurch gekennzeichnet, dass** empfängerseitig zwei logisch und/oder physikalisch getrennte Mailboxen (2.4; 2.5) angeordnet sind, wobei der e-mail Server (1.5) alle eintreffenden e-mails (2.1), die zwar die korrekte Empfängeradresse des Empfängers besitzen aber nicht in der empfängerseitigen Absenderliste (2.3) enthalten sind, in die zweite Mailbox JMB (2.5) ablegt, und diese somit für weitergehende Bearbeitung seitens Internet Service Provider, Behörden und/oder den Empfänger zur Verfügung stehen.

3. Verfahren gemäß Anspruch 1 oder 2, **dadurch gekennzeichnet, dass** die e-mails (2.1) im e-mail-Server (1.5), in einer Adressvergleichseinrichtung (2.2) und /oder zumindest in einer der Mailboxen (2.5; 2.5) optional durch den Empfänger (2.6) und/oder den ISP (1.4) konfigurierbar einem automatischen Bearbeitungs- und/oder Analyseprozess unterzogen werden, der fallspezifisch einzeln oder auf Dauer initiiert bzw. konfiguriert werden kann.

4. Verfahren gemäß einem der Ansprüche 2-3, **dadurch gekennzeichnet, dass** in der JMB (2.5) automatisch alle ausführbaren Programme, die als Anhänge von e-mails versandt werden, abgetrennt werden.

5. Verfahren gemäß einem der vorhergehenden Ansprüche, **dadurch gekennzeichnet, dass** im Falle des Empfangs einer unerwünschten e-mail automatisch Unterlassungsgesuche oder Abmahnungen generiert und dem Absender (1.1) zugestellt werden.

6. Verfahren gemäß einem der vorhergehenden Ansprüche, **dadurch gekennzeichnet, dass** Virenuntersuchungen der e-mail beispielsweise zu einer festen Uhrzeit, oder alternativ bei jeder eintreffenden Nachricht durchführt werden.

7. Verfahren gemäß einem der Ansprüche 2-7, **dadurch gekennzeichnet, dass** der Inhalt der JMB (2.5) zyklisch in bestimmten Zeitabständen gelöscht wird.

## Claims

1. Process for receiver-side automatic treatment of unwanted electronic post in communications networks, in which incoming e-mails (2.1), before storage in a mailbox (2.4) of the receiver (2.6), are automatically subjected to a comparison of the attached sender address with an electronically accessible list (2.3) of authorised sender addresses assigned to the receiver, wherein only those e-mails are transferred into the mailbox (2.4) of the receiver which have been forwarded unambiguously by authorised senders, **characterised in that** an analysis is carried out on sequentially present incremented passwords in order to thus reach a conclusion on automatic intrusion attempts into the e-mail system.

2. Process according to claim 1, **characterised in that** two logically and/or physically separate mailboxes (2.4; 2.5) are arranged on the receiver side, wherein the e-mail server (1.5) files all incoming e-mails (2.1), which indeed have the correct receiver address of the receiver but are not present in the receiver-side sender list (2.3), in the second mailbox JMB (2.5), and they are thus available for extensive processing on the part of the Internet Service Provider, authorities and/or the receiver.

3. Process according to claim 1 or 2, **characterised in that** the e-mails (2.1) in the e-mail server (1.5), in an address comparison device (2.2) and/or at least in one of the mailboxes (2.5; 2.5) are subjected in configurable manner to an automatic processing and/or analysis process optionally by the receiver (2.6) and/or the ISP (1.4), which may be initiated or configured individually or permanently according to the specific case.

4. Process according to one of claims 2-3, **characterised in that** all executable programs, which are forwarded as attachments of e-mails, are separated out automatically in the JMB (2.5).

5. Process according to one of the preceding claims, **characterised in that** in the case of receiving an unwanted e-mail, omission requests or reminders are generated automatically and delivered to the sender (1.1).

6. Process according to one of the preceding claims, **characterised in that** virus investigations of the e-mail are carried out, for example at a fixed time, or alternatively on every incoming message.

7. Process according to one of claims 2-7, **characterised in that** the content of the JMB (2.5) is erased cyclically at certain time intervals.

## Revendications

1. Procédé pour traiter automatiquement côté destinataire le courrier électronique indésirable, dans des réseaux de communication, selon lequel les courriers électroniques entrants (2.1) sont soumis automatiquement, avant d'être mis en mémoire dans une boîte aux lettres électronique (2.4) du destinataire (2.6), à une comparaison de l'adresse d'expéditeur fournie, avec une liste d'adresses d'expéditeur autorisées (2.4) qui est associée au destinataire et qui est accessible par voie électronique, étant précisé que seuls les courriers qui ont été envoyés de manière univoque par des expéditeurs autorisés sont transmis à la boîte (2.4) du destinataire,
**caractérisé en qu'**une analyse des identifications d'utilisateurs incrémentées présentes en série est effectuée afin de conclure qu'il y a des tentatives d'effraction automatiques dans le système de courrier électronique.

2. Procédé selon la revendication 1, **caractérisé en ce qu'**il est prévu côté destinataire deux boîtes aux lettres électroniques (2.4 ; 2.5) séparées logiquement et/ou physiquement, le serveur de courrier électronique (1.5) stockant dans la seconde boîte aux lettres électronique JMB (2.5) tous les courriers entrants (2.1) qui ont, il est vrai, la bonne adresse de destinataire du destinataire, mais qui ne sont pas contenus dans la liste d'expéditeurs (2.3) prévue côté destinataire, et ces courriers étant ainsi disponibles pour un traitement plus étendu, du côté du fournisseur de services Internet, des autorités et/ou du destinataire.

3. Procédé selon la revendication 1 ou 2, **caractérisé en ce que** les courriers électroniques (2.1) sont soumis, de manière configurable par le destinataire (2.6) et/ou par le fournisseur de services Internet (1.4), à titre optionnel, à une opération de traitement et/ou d'analyse automatique dans le serveur de courrier électronique (1.5), dans un dispositif de comparaison d'adresses (2.2) et/ou au moins dans l'une des boîtes (2.5 ; 2.5), laquelle opération peut être initialisée ou configurée individuellement en fonction des cas, ou de manière permanente.

4. Procédé selon l'une des revendications 2-3, **caractérisé en ce que** dans la boîte JMB (2.5), tous les programmes exécutables qui sont envoyés sous la forme de pièces jointes de courriers électroniques sont séparés automatiquement.

5. Procédé selon l'une des revendications précédentes, **caractérisé en ce que** dans le cas où un courrier électronique indésirable est reçu, des demandes de cessation ou des rappels à l'ordre sont automatiquement générés et adressés à l'expéditeur (1.1).

6. Procédé selon l'une des revendications précédentes, **caractérisé en ce que** des recherches de virus dans le courrier électronique sont effectuées par exemple à heure fixe ou bien à chaque fois qu'un message arrive.

7. Procédé selon l'une des revendications 2 à 7, **caractérisé en ce que** le contenu de la boîte JMB (2.5) est effacé cycliquement à intervalles définis.
